(19) Europäisches Patentamt
European Patent Office
Office européen des brevets

(11) Veröffentlichungsnummer: **0 037 518**
**B1**

(12) # EUROPÄISCHE PATENTSCHRIFT

(45) Veröffentlichungstag der Patentschrift: **15.02.84**

(51) Int. Cl.³: **H 04 B 1/58**

(21) Anmeldenummer: **81102244.1**

(22) Anmeldetag: **25.03.81**

(54) **Übertragerfreie Gabelschaltung.**

(30) Priorität: **04.04.80 US 137810**
**23.05.80 DE 3019882**

(43) Veröffentlichungstag der Anmeldung:
**14.10.81 Patentblatt 81/41**

(45) Bekanntmachung des Hinweises auf die Patenterteilung:
**15.02.84 Patentblatt 84/7**

(84) Benannte Vertragsstaaten:
**AT BE CH FR GB IT LI NL SE**

(56) Entgegenhaltungen:
**FR - A - 2 343 375**
**GB - A - 2 014 398**
**US - A - 3 855 430**

**IBM TECHNICAL DISCLOSURE BULLETIN, Band 16, Nr. 2, Juli 1973, Seiten 495-196 New York, U.S.A. D.E. FISK et al.: "Balanced electronic hybrid circuits"**

(73) Patentinhaber: **SIEMENS AKTIENGESELLSCHAFT, Berlin und München Wittelsbacherplatz 2, D-8000 München 2 (DE)**

(72) Erfinder: **Birth, Winfrid, Dipl.-Ing., Ostpreussenstrasse 51, D-8000 München 81 (DE)**
Erfinder: **Minch, Morris Louis, 8453 North West 27th Drive, Coral Springs Florida 33065 (US)**
Erfinder: **Wagner, Theodore Walter, 1255 Whimbrel Road, West Palm Beach Florida 33411 (US)**

**EP 0 037 518 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Übertragerfreie Gabelschaltung

Um in einem Fernmeldesystem eine Kommunikation zwischen zwei Fernmeldestellen zu ermöglichen, sind zwischen den Fernmeldestellen Übertragungseinrichtungen erforderlich, die eine hinreichend störungsfreie Signalübertragung in beiden Übertragungsrichtungen ermöglichen. Hierzu kann für jede Übertragungsrichtung eine eigene, ggf. im Multiplexbetrieb auch für eine Mehrzahl gleichzeitig bestehender Verbindungen jeweils zweier Fernmeldestellen mehrfach ausgenutzte Übertragungsleitung vorgesehen sein; ein solcher Vierdrahtbetrieb wird vorzugsweise in höheren Fernmeldenetzebenen vorgesehen sein. In unteren Fernmeldeebenen, insbesondere im Bereich der Teilnehmeranschlussleitungen, wird im allgemeinen eine Signalübertragung im Duplexbetrieb über Zweidrahtleitungen durchgeführt, wobei die Trennung der Übertragungssignale der beiden Übertragungsrichtungen mit Hilfe einer die Zweidrahtleitung abschliessenden Gabelschaltung bewirkt wird, die die Zweidrahtleitung beispielsweise in den vierdrähtigen Teil einer Teilnehmerendstelle (und umgekehrt) unter Entkopplung des von der Gabelschaltung wegführenden Ausgangszweigs der Vierdrahtleitung von derem zur Gabelschaltung hinführenden Eingangszweig überführt. (Zur Gewährleistung einer hohen Übertragungsqualität durch die Gabelschaltung ist ausser der Entkopplung zwischen Eingangs- und Ausgangszweig der Vierdrahtleitung auch Reflexionsfreiheit zwischen Gabelschaltung und Zweidrahtleitung erwünscht, was entsprechende zusätzliche Anforderungen an die Gabelschaltung stellt.)

Es ist bereits (aus DE-A1-2914945, Fig. 1) ein Übertragungssystem mit einer übertragerfreien Gabelschaltung zur Verbindung einer Zweidrahtleitung mit einer Vierdrahtleitung bekannt, bei der das über den Eingangszweig der Vierdrahtleitung bei der Gabelschaltung ankommende Eingangssignal über eine an die Zweidrahtleitung angepasste Impedanzschaltung auf die Zweidrahtleitung gelangt und das auf der Zweidrahtleitung auftretende Signal in einem Addierer mit dem mit (−½) multiplizierten Eingangssignal addiert wird, wobei der Ausgang des Addierers den von der Gabelschaltung abgehenden Ausgangszweig der Vierdrahtleitung bildet. Bei der Zweidrahtleitung dieses bekannten Übertragungssystems handelt es sich um eine (bezogen auf Erde) unsymmetrische Zweidrahtleitung; demgegenüber ist in der Praxis vielfach eine symmetrische Zweidrahtleitung erwünscht.

In diesem Zusammenhang ist es (aus FR-A-2343375 = DE-A-2607480) bekannt, zwei dort näher beschriebene, jeweils zwei Operationsverstärker aufweisende unsymmetrische Gabelanordnungen zu verwenden und und zu einer insgesamt vier Operationsverstärker aufweisenden symmetrischen Gabelanordnung zusammenzuschalten.

Ebenfalls vier Operationsverstärker weist auch eine andere (aus US-A-3855430) bekannte Gabelschaltung zur Verbindung einer symmetrischen Zweidrahtleitung mit einer unsymmetrischen Vierdrahtleitung auf, bei der die nichtinvertierenden Eingänge zweier im Eingangszweig der Vierdrahtleitung liegender Operationsverstärker jeweils an einer Bezugsgleichspannung liegen, wobei der Ausgang des einen Operationsverstärkers über einen Widerstand mit der einen Ader der Zweidrahtleitung und über einen weiteren Widerstand mit dem invertierenden Eingang des anderen Operationsverstärkers verbunden ist, dessen Ausgang über einen wiederum weiteren Widerstand mit der anderen Ader der Zweidrahtleitung verbunden ist.

Aus der US-A-4041252 ist auch schon eine übertragerfreie Gabelschaltung zur Verbindung einer Zweidrahtleitung mit dem Eingangszweig und dem Ausgangszweig einer Vierdrahtleitung bei gleichzeitiger Entkopplung der beiden Vierdrahtleitungszweige voneinander bekannt, bei der das über den Eingangszweig der Vierdrahtleitung ankommende und an den beiden Eingangsklemmen mit zueinander gegenphasigen Eingangssignalspannungen auftretende Eingangssignal durch eine an die Zweidrahtleitung angepasste Impedanzschaltung gedämpft auf die Zweidrahtleitung gelangt und das auf der Zweidrahtleitung auftretende Signal nach Substraktion des halben Eingangssignals zu dem abgehenden Ausgangszweig der Vierdrahtleitung gelangt; dabei ist die über einen dem halben ohmschen Anteil des Zweidrahtleitungswiderstandes entsprechenden ohmschen Widerstand mit der einen Eingangsklemme verbundene eine Zweidrahtleitungsader mit dem einen Eingang und die in entsprechender Weise mit der anderen Eingangsklemme verbundene andere Zweidrahtleitungsader mit dem anderen Eingang eines Operationsverstärkers verbunden, an dessen Ausgang der ausserdem über ein Kompensationsnetzwerk mit einer der beiden im Eingangszweig der Vierdrahtleitung liegenden Eingangsklemmen verbundene invertierende Eingang eines weiteren Operationsverstärkers angeschlossen ist, dessen über einen Rückkopplungswiderstand ebenfalls mit diesem invertierenden Eingang verbundener Ausgang zu dem abgehenden Ausgangszweig der Vierdrahtleitung führt. Bei dieser bekannten übertragerfreien Gabelschaltung, bei der mit Hilfe des genannten Kompensationsnetzwerks eine Substraktion des von der Zweidrahtleitung zum Ausgangszweig der Vierdrahtleitung gelangenden Eingangssignalanteil bewirkt wird, wird durch eben dieses Kompensationsnetzwerk die Symmetrie des gabelschaltungsseitigen Abschlusses der Zweidrahtleitung und damit die Symmetrie der gesamten Zweidrahtleitungsschaltung stark gestört, so dass auch hier die Zweidrahtleitung letztlich nicht mit dem gewünschten Symmetriegrad als symmetrische Zweidrahtleitung betrieben werden kann.

Es ist auch schon (aus «IBM Technical Disclosure Bulletin» vol. 16, Nr. 2, Juli 1973, Seiten 495/496) eine symmetrische Gabelanordnung mit zwei Verstärkern bekannt, bei der an die eine Zweidrahtleitungsader, die über eine erste Nachbildungsimpedanz mit der einen Ausgangsklemme eines im Eingangszweig der Vierdrahtleitung liegenden ersten Verstärkers verbunden ist, über einen ersten Widerstand die eine Eingangsklemme eines zum Ausgangszweig der Vierdrahtleitung führenden zweiten Verstärkers angeschlossen ist, die ausserdem über einen zweiten Widerstand mit der anderen Ausgangsklemme des ersten Verstärkers verbunden ist, und bei der an die andere Zweidrahtleitungsader, die über eine zweite Nachbildungsimpedanz mit dieser anderen Ausgangsklemme des ersten Verstärkers verbunden ist, über einen dritten Widerstand die andere Eingangsklemme des zweiten Verstärkers angeschlossen ist, die ausserdem über einen vierten Widerstand mit der genannten einen Ausgangsklemme des ersten Verstärkers verbunden ist.

Der Erfindung liegt nun die Aufgabe zugrunde, eine prinzipiell noch weniger aufwendige und zugleich durch eine besonders übersichtliche Dimensionierung die gewünschte Leitungssymmetrie der Zweidrahtleitung gewährleistende übertragerfreie Gabelschaltung anzugeben.

Die Erfindung betrifft eine übertragerfreie Gabelschaltung zur Verbindung einer Zweidrahtleitung mit dem Eingangszweig und dem Ausgangszweig einer Vierdrahtleitung bei gleichzeitiger Entkopplung der beiden Vierdrahtleitungszweige voneinander, bei der das über den Eingangszweig der Vierdrahtleitung ankommende und an den beiden Eingangsklemmen mit zueinander gegenphasigen Eingangssignalspannungen auftretende Eingangssignal durch eine an die Zweidrahtleitung angepasste Impedanzschaltung gedämpft auf die Zweidrahtleitung gelangt und das auf der Zweidrahtleitung auftretende Signal nach Substraktion des Eingangssignalteils zu dem abgehenden Ausgangszweig der Vierdrahtleitung gelangt, wobei die eine Zweidrahtleitungsader über eine erste Nachbildungsimpedanz mit der einen Klemme des Eingangszweigs der Vierdrahtleitung verbunden ist und wobei die andere Zweidrahtleitungsader über eine zweite Nachbildungsimpedanz mit der anderen Ausgangsklemme des Eingangszweigs der Vierdrahtleitung verbunden ist; diese übertragerfreie Gabelschaltung ist erfindungsgemäss dadurch gekennzeichnet, dass an die eine Zweidrahtleitungsader, die über eine den halben Wellenwiderstand der symmetrischen Zweidrahtleitung zumindest angenähert Impedanz mit der einen Klemme des zumindest wechselstrommässig niederohmigen Eingangszweigs der Vierdrahtleitung verbunden ist, die eine Eingangsklemme eines zum Ausgangszweig der Vierdrahtleitung führenden Operationsverstärkers über einen ersten Widerstand hohen Widerstandswerts angeschlossen ist, die ausserdem mit der anderen Ausgangsklemme des Eingangszweigs über einen zweiten Widerstand hohen Widerstandswerts verbunden ist, und dass an die andere Zweidrahtleitungsader, die über eine ebenfalls den halben Wellenwiderstand der Zweidrahtleitung zumindest angenähert nachbildende Impedanz mit dieser anderen Ausgangsklemme des Eingangszweigs der Vierdrahtleitung verbunden ist, die andere Eingangsklemme des Operationsverstärkers über einen dritten Widerstand ebenfalls hohen Widerstandswerts angeschlossen ist, die ausserdem mit der genannten einen Ausgangsklemme des Eingangszweigs über einen wiederum hohen vierten Widerstand verbunden ist, wobei der invertierende Eingang des Operationsverstärkers mit dessen Ausgang und der nichtinvertierende Eingang des Operationsverstärkers mit dem Leitungssymmetriepunkt jeweils über einen ebenfalls hochohmigen Widerstand verbunden ist.

Die Erfindung ermöglicht es, mit einer wenig aufwendigen übertragerfreien Gabelschaltung eine symmetrische Zweidrahtleitung — ohne Beeinträchtigung der Leitungssymmetrie durch einen unsymmetrischen Kompensationszweig — in eine Vierdrahtleitung und umgekehrt überführen zu können, wobei die Gabelschaltung grundsätzlich sowohl eine Entkopplung zwischen Eingangs- und Ausgangszweig der Vierdrahtleitung als auch einen zumindest angenähert reflexionsfreien Abschluss der Zweidrahtleitung ermöglicht. Die Gabelschaltung kann dabei beispielsweise in einer Fernmelde-Teilnehmerstelle beim Übergang zwischen der (vierdrähtigen) Fernmelde-Teilnehmerstelle und der (zweidrähtigen) Teilnehmeranschlussleitung Anwendung finden oder auch beim Übergang zwischen dieser (zweidrähtigen) Teilnehmeranschlussleitung und der zugehörigen (vierdrähtigen) Fernmelde-Vermittlungsstelle, insbesondere Digital-Vermittlungsstelle; für den letzteren Anwendungsfall werden dabei zugleich Weiterbildungsmöglichkeiten für einfach zu realisierende Indikationen, wie die Schleifenschlussindikation, die Indikation von Schleifenstromunsymmetrien bei Erdtastenbetätigung im Fall eines Isolationsfehlers bzw. bei Vorliegen eines Rufs sowie für den Überstromschutz der Teilnehmeranschlussleitung eröffnet.

Dabei erweist sich im Hinblick auf die einfache Gewährleistung der Leitungssymmetrie der Zweidrahtleitung eine besonders übersichtliche Dimensionierung der Gabelschaltung als vorteilhaft, derzufolge in weiterer Ausgestaltung der Erfindung die an die eine Zweidrahtleitungsader über den ersten Widerstand hohen Widerstandswerts angeschlossene eine Eingangsklemme des zum Empfangszweig der Vierdrahtleitung führenden Operationsverstärkers über einen doppelt so grossen zweiten Widerstand mit der anderen Ausgangsklemme des Eingangszweigs verbunden ist, und derzufolge die an die andere Zweidrahtleitungsader über den dritten Widerstand ebenfalls des genannten hohen Widerstandswerts angeschlossene andere Eingangsklemme des Operationsverstärkers über einen wiederum doppelt so hohen vierten Widerstand mit der genannten einen Ausgangsklemme des Eingangszweigs verbunden ist, wobei der invertierende Eingang des Operationsverstärkers mit dessen Ausgang und der nichtinvertierende Eingang des Operationsverstärkers mit dem Leitungssymmetriepunkt jeweils über einen Widerstand mit einem v-mal so hohen

Widerstandswert verbunden ist, worin v der Verstärkungsfaktor des Operationsverstärkers ist.

Für die Niederohmigkeit des Eingangszweigs der Vierdrahtleitung ist es zweckmässig, dass in weiterer Ausgestaltung der Erfindung die nichtinvertierenden Eingänge zweier im Eingangszweig der Vierdrahtleitung liegender Operationsverstärker jeweils an einer Bezugsgleichspannung liegen, dass an dem nichtinvertierenden Eingang des ersten der beiden Operationsverstärker der Eingangszweig der Vierdrahtleitung angeschlossen ist, und dass der Ausgang dieses Operationsverstärkers über einen Widerstand mit der a-Ader der Zweidrahtleitung und über einen weiteren Widerstand mit dem invertierenden Eingang des zweiten Operationsverstärkers verbunden ist, dessen Ausgang über einen Widerstand an der b-Ader der Zweidrahtleitung liegt.

Die Gabelschaltung gemäss der Erfindung ist nicht auf eine Nachrichtenübertragung im Gleichlageverfahren beschränkt; vielmehr kann sie auch in einem Übertragungssystem mit in der Zeitlage und/oder Frequenzlage voneinander getrennten Zweidrahtleitungs-Übertragungskanälen Anwendung finden, in dem die Gabelschaltung in weiterer Ausgestaltung der Erfindung mit einem Vierdrahtleitungs-Eingangszweig zum Aussenden von Sendesignalimpulsen zu bestimmten Zeitpunkten und/oder mit einem bestimmten Schwerpunkt ihres Frequenzspektrums und einem Vierdrahtleitungs-Ausgangszweig zum Empfangen von Empfangssignalimpulsen zu anderen Zeitpunkten und/oder mit einem anderen Schwerpunkt ihres Frequenzspektrums verbunden ist. Gemäss einer weiteren Ausgestaltung der Erfindung wird angegeben, wie mit Hilfe eines Differenzverstärkers und einem von diesem beaufschalgten Transistor eine Überwachung der Teilnehmeranschlussleitung auf Schleifenschluss vorgenommen werden kann.

Gemäss einer anderen weiteren Ausgestaltung der Erfindung ist zur Begrenzung des Stroms in der Teilnehmeranschlussleitung ein Schwellwertglied, das durch das Ausgangssignal der ersten Summierstufe angesteuert wird, sowie ein Transistor vorgesehen, der im Falle des Überschreitens des Schwellwerts durch das Ausgangssignal der Summierstufe die Bezugsgleichspannung des mit seinem Ausgang an der b-Ader der Teilnehmeranschlussleitung liegenden Operationsverstärkers so weit verändert, dass die Ausgangssignale der beiden Operationsverstärker annähernd gleich gross sind mit der Folge einer Strombegrenzung auf der Teilnehmeranschlussleitung.

Noch eine andere Ausgestaltung der erfindungsgemässen Teilnehmeranschlussschaltung ermöglicht die Feststellung einer Unsymmetrie des über die Leitungsadern der Teilnehmeranschlussleitung fliessenden Stroms, wie sie ohne Rufstromeinspeisung bei Erdtastenbetätigung oder durch eine fehlerhafte Erdverbindung der Teilnehmeranschlussleitung oder aber bei ordnungsgemässem Betrieb im Falle der Rufeinspeisung auftritt. Hierzu dienen eine zweite Summierstufe, die mit denselben Eingangsspannungen beaufschlagt wird wie die erste Summierstufe, ein zweiter Differenzverstärker, mit dessen Hilfe die Ausgangsspannung der zweiten Summierstufe mit einer Bezugsspannung verglichen wird sowie ein elektronischer Schalter, der im Falle einer Unter- bzw. Überschreitung des erwähnten Schwellwerts seinen Leitfähigkeitszustand ändert und damit ein Anzeigenkriterium liefert.

Anhand der Zeichnungen sei die Erfindung noch näher erläutert.

Dabei zeigt:

Fig. 1 ein erstes Ausführungsbeispiel einer Gabelschaltung gemäss der Erfindung;

Fig. 2 zeigt ein zweites Ausführungsbeispiel einer Gabelschaltung gemäss der Erfindung;

Fig. 3 zeigt ein mehr ins einzelne gehendes Schaltbild einer solchen Gabelschaltung, das auch den erwähnten Weiterbildungen der Erfindung entsprechende Schaltungsteile verdeutlicht;

Fig. 4 zeigt ein weiteres Ausführungsbeispiel für eine erfindungsgemässe Gabelschaltung.

Die Zeichnung Fig. 1 zeigt ein Prinzipschaltbild eines Zweidraht-Vierdraht-Übertragungssystems mit einer Gabelschaltung gemäss der Erfindung. In dem in der Zeichnung dargestellten Übertragungssystem, in dem sowohl Analogsignale (Sprache, Video) als auch Digitalsignale (z.B. Daten) übertragen werden können, ist zur Verbindung einer symmetrischen Zweidrahtleitung ZL mit einer einen Sendezweig VS und einen Empfangszweig VE aufweisenden Vierdrahtleitung VL bei gleichzeitiger Entkopplung der beiden Vierdrahtleitungszweige VS, VE voneinander eine übertragerfreie Gabelschaltung G gemäss der Erfindung vorgesehen.

In dieser Gabelschaltung G sind die beiden Adern a, b der symmetrischen Zweidrahtleitung ZL über die beiden Hälften einer den Wellenwiderstand der Zweidrahtleitung ZL zumindest angenähert nachbildenden Zweidrahtleitungs-Abschlussimpedanz Z/2 + Z/2 mit den beiden Ausgangsklemmen sa, sb des Eingangszweiges VS der Vierdrahtleitung VL verbunden. Dieser Eingangszweig VS ist ebenfalls symmetrisch ausgebildet, d.h. seine beiden Ausgangsklemmen sa, sb führen gegenphasig zueinander die jeweilige Eingangssignalspannung Us (bezogen auf einen ein Mittelpotential führenden Leitungssymmetriepunkt O); der zwischen den beiden Ausgangsklemmen sa, sb bzw. zwischen jeweils einer Ausgangsklemme und dem Leitungssymmetriepunkt O auftretende Innenwiderstand des Eingangszweiges VS möge zumindest näherungsweise vernachlässigbar klein sein. Tritt dann zwischen den beiden Ausgangsklemmen sa, sb des Eingangszweigs VS der Vierdrahtleitung VL insgesamt eine Eingangssignalspannung 2: Us auf, so wird diese durch die beiden Hälften Z/2, Z/2 der Zweidrahtleitungs-Abschlussimpedanz gerade so gedämpft, dass auf die beiden Zweidrahtleitungsadern a, b Sendesignalpotentiale jeweils des Betrages Us/2 mit entgegengesetzten Vorzeichen gelangen.

An die beiden Zweidrahtleitungsadern a, b sind ausserdem über zwei Widerstände R die beiden Eingänge −, + eines zum Ausgangszweig VE der Vierdrahtleitung VL führenden Operationsverstärkers V angeschlossen; die beiden Widerstände R mögen einen gegenüber dem Wellenwiderstand hohen Widerstandswert haben, so dass ihr Einfluss auf den Abschluss der Zweidrahtleitung ZL zumindest näherungsweise zu vernachlässigen ist. Über zwei Widerstände 2R doppelt so hohen Widerstandswertes sind die beiden Eingänge −, + des Operationsverstärkers V ausserdem in zu der Zuordnung zu den Zweidrahtleitungsadern a, b umgekehrter Zuordnung mit den beiden Ausgangsklemmen sb, sa des Eingangszweigs VS der Vierdrahtleitung VL verbunden. Schliesslich ist noch der invertierende Eingang (−) des Operationsverstärkers V mit dessen Ausgang und der nichtinvertierende Eingang (+) mit dem Leitungssymmetriepunkt O verbunden, und zwar jeweils über einen Widerstand vR mit einem zu den erstgenannten Widerständen (R) v-mal so grossen Widerstandswert. Operationsverstärkerausgang A und Leitungssymmetriepunkt O bilden den Eingang des Ausgangszweigs VE der Vierdrahtleitung VL. Hier tritt nun auf Empfangssignalpotentiale $\pm$ Ue/2, hin, die auf den Zweidrahtleitungsadern a, b (von deren fernem Ende her) ankommen und denen dort an sich die oben erwähnten Sendesignalpotentiale $\pm$ Us/2 überlagert sind, gerade nur eine reine Empfangssignalspannung v·Ue auf, während die zu den Eingangsklemmen des Operationsverstärkers V gelangenden Sendesignalkomponenten sich jeweils gerade (zumindest angenähert) kompensieren.

Die Gabelschaltung gemäss der Erfindung ist nicht auf eine Nachrichtenübertragung im Gleichlageverfahren beschränkt, sondern kann auch in einem Übertragungssystem mit in der Zeitlage und/oder Frequenzlage voneinander getrennten Zweidrahtleitungs-Übertragungskanälen Anwendung finden: Die Gabelschaltung ist dann mit einem Vierdrahtleitungs-Eingangszweig VS zum Aussenden von Eingangssignalimpulsen zu bestimmten Zeitpunkten und/oder mit einem bestimmten Schwerpunkt ihres Frequenzspektrums und einem Vierdrahtleitungs-Ausgangszweig VE zum Empfangen von Ausgangssignalimpulsen zu anderen Zeitpunkten und/oder mit einem anderen Schwerpunkt ihres Frequenzspektrums verbunden. Der Gabelschaltung kann dabei im Eingangszweig VS der Vierdrahtleitung VL eine Kettenschaltung eines beispielsweise durch einen Delta-Modulator gegebenen Sprachsignal-Coders und einer Digitalsignal-Sendeschaltung zum Aussenden von Eingangssignalimpulsen beispielsweise zu bestimmten Zeitpunkten vorgeschaltet sein und im Ausgangszweig VE der Vierdrahtleitung VL eine Kettenschaltung einer entsprechenden Digitalsignal-Empfangsschaltung und eines ggf. durch einen Delta-Demodulator gegebenen Sprachsignal-Decoders nachgeschaltet sein. Die erwähnte Digitalsignal-Sendeschaltung kann dabei beispielsweise Pseudoternär-Halbschritt-Signalimpulse, sogenannte half-bauded AMI-(alternate-mark-inversion)Signalimpulse, abgeben, wozu sie, wie dies an anderer Stelle (DE-A 3-2916576) vorgeschlagen wird, einen Momentanwerte der Eingangssignalimpulse codiert speichernden und nach Massgabe der vom Sprachsignal-Coder abgegebenen Digitalsignale angesteuerten Festwertspeicher aufweisen kann, der die entsprechenden Momentanwert in ihrer codierten Darstellung einem Decoder zuführt, welcher daraus die entsprechenden Eingangssignalimpulse bildet. Die Digitalsignal-Empfangsschaltung kann einen Regenerator enthalten, wie er prinzipiell (beispielsweise aus der Siemens-Druckschrift «PCM — Die Pulscode-Modulation und ihre Anwendung im Fernmeldewesen», Seite 15, Bild 21) bekannt ist und in dem mit Hilfe eines Taktextraktors aus den Ausgangssignalimpulsen ein Empfangsbittakt abgeleitet wird, aufgrund dessen die Entscheidungszeitpunkte definiert werden, in denen in der Digitalsignal-Empfangsschaltung jeweils die Amplitudenentscheidung über den jeweiligen Zustandswert des betreffenden Bits getroffen wird; des weiteren kann die Digitalsignal-Empfangsschaltung einen beispielsweise mit einer Gleichrichterschaltung zu realisierenden Empfangssignalwandler enthalten, der die regenerierten Signale in entsprechende ΔM- bzw. PCM-Signale umformt. Der Sendebittakt kann, wie dies an anderer Stelle (DE-AS 2921019) vorgeschlagen wird, vom Empfangsbittakt abgeleitet und diesem gegenüber um eine halbe Bitzeitspanne phasenverschoben sein. Solche schaltungstechnischen Einzelheiten des Eingangszweiges VS und Ausgangszweiges VE der Vierdrahtleitung VL sind in der Zeichnung jedoch nicht mehr dargestellt und brauchen hier auch nicht weiter verfolgt zu werden, da dies zum Verständnis der Erfindung nicht erforderlich ist.

Die in Fig. 2 dargestellte erfindungsgemässe Gabelschaltung enthält zwei Operationsverstärker OP1 und OP2, also Verstärker mit Differenzverstärkereingang, einem sehr hohen Eingangswiderstand, einem sehr niedrigen Ausgangswiderstand und einer sehr grossen Leerlaufverstärkung.

Die nichtinvertierenden Eingänge der beiden Operationsverstärker liegen jeweils an einer Bezugsgleichspannung, die von der Speisespannungsquelle einer die Zweidrahtleitung bildenden Teilnehmeranschlussleitung abgeleitet sein möge. Am nichtinvertierenden Eingang des Operationsverstärkers OP2 ist ausserdem der Empfangszweig VE der Vierdrahtleitung angeschlossen. Zwischen den Ausgängen der beiden Operationsverstärker besteht jeweils eine Rückkopplung über einen Widerstand Rr1 bzw. Rr2 zum jeweiligen invertierenden Eingang. Der Ausgang des Operationsverstärkers OP2 ist ausserdem über einen Widerstand RK an den invertierenden Eingang des Operationsverstärkers OP1 angeschlossen.

Der Ausgang des Operationsverstärkers OP1 steht über einen Widerstand RF1 mit der b-Ader der Zweidrahtteilnehmeranschlussleitung in Verbindung. In entsprechender Weise ist der Ausgang des Operationsverstärkers OP2 über einen weiteren Widerstand RF2, der vorzugsweise den gleichen Widerstandswert wie der andere Widerstand RF aufweist, an die a-Ader der Teilnehmeranschlussleitung angeschlossen. Die Teilnehmeranschlussleitung möge der Verbindung einer nicht dargestellten Teilnehmerstation mit der zugehörigen vermittlungsstellenseitigen Teilnehmeranschlussleitung dienen, zu der die beschriebene Gabelschaltung gehört.

Weiterer Bestandteil der erfindungsgemässen Gabelschaltung ist ein Differenzverstärker A1. Der nichtinvertierende Eingang dieses Differenzverstärkers ist einerseits über einen Widerstand R1 mit dem Ausgang des erwähnten Operationsverstärkers OP1 und andererseits über einen Widerstand R3 mit der a-Ader der Teilnehmeranschlussleitung verbunden. In entsprechender Weise besteht zwischen dem invertierenden Eingang des Differenzverstärkers über einen Widerstand R2 eine Verbindung mit dem Ausgang des Operationsverstärkers OP2 und über einen Widerstand R4 eine Verbindung mit der b-Ader der Teilnehmeranschlussleitung. Zwischen dem Ausgang des Differenzverstärkers A1 und dessen invertierendem Eingang besteht über einen Widerstand Rr eine Rückkopplungsverbindung. Der Ausgang ist ausserdem an den Sendezweig VS der Vierdrahtleitung angeschlossen.

Wie die Fig. 3 zeigt, kann die erfindungsgemässe Schaltungsanordnung insbesondere zum Zwecke der Vornahme verschiedener Überwachungsaufgaben noch in verschiedener Weise weiter ausgestaltet sein. Zum Zwecke der Schleifenschlussüberwachung der die a-Ader und die b-Ader umfassenden Teilnehmeranschlussleitung ist ein zweiter Differenzverstärker A2 vorgesehen, dessen invertierender Eingang (−) mit dem Ausgang des ersten Differenzverstärkers A1 verbunden ist und dessen nichtinvertierender Eingang (+) an einer Bezugsgleichspannung +V liegt. Ferner ist in diesem Zusammenhang ein Transistor Q1 vorgesehen, der mit seiner Steuerelektrode an den Ausgang des zweiten Differenzverstärkers A2 angeschlossen ist. Die Schaltkreisparameter, also insbesondere die Verstärkung des Differenzverstärkers A1, die am nichtinvertierenden Eingang (+) des zweiten Differenzverstärkers A2 liegende Bezugsspannung +V sowie die Vorspannung des erwähnten Transistors Q1 sind so gewählt, dass bei über den Hakenumschalter der Teilnehmerstation geschlossener Teilnehmerschleife der dann fliessende Strom ein Ausgangssignal des ersten Differenzverstärkers A1 hervorruft, das die Bezugsspannung am zweiten Differenzverstärker A2 unterschreitet, so dass der zweite Differenzverstärker A2 ein Ausgangssignal abgibt, das den Transistor Q1 in den leitenden Zustand bringt, womit das Vorliegen des Schleifenschlusses bei entsprechender Auswertung des dann vorliegenden Kollektorpotentials OFFH anzeigen wird. Wegen der Differenzverstärkereigenschaft des Verstärkers A2 und wegen der Amplitudenrelation der auf der Teilnehmeranschlussleitung auftretenden Wechselströme und der Vergleichsgleichspannung ist sichergestellt, dass solche Wechselströme die erwähnte Schleifenschlussanzeige nicht beeinflussen.

Wenn der in der Teilnehmeranschlussleitung fliessende Strom begrenzt werden soll, ist, wie ebenfalls die Fig. 3 zeigt, ein Schwellwertglied mit einer Diode D1, die mit Hilfe eines Spannungsteilers aus den Widerständen R5, R6 und R7 normalerweise in Sperrichtung vorgespannt ist, sowie ein Transistor Q2 vorgesehen, in dessen Steuerstromkreis die Diode D1 liegt. Dem Schwellwertglied wird über ein aus dem Widerstand R8 und dem Kondensator C1 gebildetes Siebglied die Ausgangsspannung des ersten Differenzverstärkers A1 zugeführt. Wenn aufgrund eines unzulässig hohen Stromes in der Teilnehmeranschlussleitung die Ausgangsspannung des ersten Differenzverstärkers A1 den Schwellwert des Schwellwertgliedes übersteigt und dadurch die Diode D1 leitend wird, führt die damit verbundene Spannungsänderung im Steuerstromkreis des Transistors Q2 zu einer Änderung dessen Leitfähigkeitszustandes. Da der Kollektor dieses Transistors Q2 auch mit dem Anschluss verbunden ist, über den dem ersten Operationsverstärker OP1 der erfindungsgemässen Gabelschaltung eine Bezugsspannung zugeführt wird, bewirkt eine solche Leitfähigkeitsänderung auch eine Änderung der Bezugsspannung so weit, dass die Ausgangsspannungen der Operationsverstärker OP1 und OP2 annähernd gleich gross werden mit der Folge einer Verringerung der Spannungen zwischen der a-Ader und b-Ader der Teilnehmeranschlussleitung. Dies wiederum führt, wie gewünscht, zu einer Begrenzung des über die Zweidrahtteilnehmeranschlussleitung fliessenden Strom.

Die in Fig. 3 dargestellte Schaltungsanordnung ist so ausgestattet, dass ausser den erwähnten Funktionen auch eine Unsymmetrie des über die Leitungsadern a, b der Teilnehmeranschlussleitung fliessenden Stroms festgestellt werden kann. Eine solche Unsymmetrie tritt entweder im Falle einer Rufstromeinspeisung in die Teilnehmeranschlussleitung auf oder aber ohne eine solche Stromeinspeisung dann, wenn eine Erdtastenbetätigung vorliegt oder wenn aufgrund eines Isolationsfehlers die b-Ader niederohmig an Erde liegt. Zum Zwecke einer derartigen Feststellung weist die Schaltungsanordnung gemäss Fig. 3 ausserdem einen dritten Differenzverstärker A3, einen vierten Differenzverstärker A4 sowie einen elektronischen Schalter in Form des Transistors Q3 auf. Die Eingänge des Differenzverstärkers A3 werden über die Widerstände R1′ bis R4′ von denselben Eingangsspannungen beaufschlagt wie diejenigen des ersten Differenzverstärkers A1. Der vierte Differenzverstärker A4 wird als Komparator ausgenutzt, der die Ausgangsspannung des Differenzverstärkers A3 mit einer Bezugsspannung des Differenzverstärkers A3 mit einer Bezugsspannung vergleicht. Das Ausgangssignal des vierten Differenzverstärkers A4 dient als Steuersignal für den Transistor Q3. Die Schaltkreisparameter sind so gewählt, dass dann, wenn sich auf der Teilnehmeranschlussleitung eine Unsymmetrie des Gleichstromflusses einstellt, die Ausgangsspannung des Differenzverstärkers A3, die dieser Unsymmetrie proportional ist, den vorgegebenen Schwellwert unterschreitet mit der Folge, dass das vom Differenzverstärker A4 abgegebene Ausgangssignal den Transistor Q3 in den leitenden Zustand umschaltet, wobei dessen dann vorliegendes Kollektorpotential GK als Anzeige für eine solche Unsymmetrie ausgewertet werden kann. Der den Rückkopplungswiderstand Rr4 des Differenzverstärkers A3 überbrückende Kondensator CR verhindert in diesem Zusammenhang, dass das Auftreten von Wechselstromsignalen auf der Teilnehmeranschlussleitung als das Vorliegen einer Unsymmetrie ausgewertet wird.

Bei der Schaltungsanordnung gemäss Fig. 3 ist es möglich, durch ein an den Verbindungspunkt der Spannungsteilerwiderstände R5 und R6 angelegtes Signal PDWN, beispielsweise in Form eines Potentialwechsels von +5 auf Endpotential, die Betriebsspannung von der Teilnehmeranschlussleitung zu nehmen. In diesem Fall geht nämlich der Transistor Q2 in den gesperrten Zustand über, womit sich die Bezugsspannung für den Operationsverstärker OP1 so weit ändert, dass an dessen Ausgang annähernd dasselbe Potential wie am Ausgang des Operationsverstärkers OP2 auftritt und damit die Potentialdifferenz zwischen der a-Ader und der b-Ader der Teilnehmeranschlussleitung annähernd zu Null wird.

Die Fig. 4 zeigt ein alternatives Ausführungsbeispiel der erfindungsgemässen Schaltungsanordnung, wie sie in Fig. 3 dargestellt ist, das sich demgegenüber im wesentlichen dadurch auszeichnet, dass anstelle der Differenzverstärker A1 und A3 und den ihren Eingängen vorgeschalteten Widerständen die mit S1 und S2 bezeichneten Summierstufen eingesetzt worden sind. Es ist möglich, in integrierter Schaltkreistechnik aufgebaute Bausteine zu verwenden, da keine hohe Toleranzen aufweisenden Widerstände benötigt werden und der Gesamtwiderstand relativ gering gehalten werden kann (unterhalb 200 kΩ).

Mit Ausnahme der erwähnten Summierstufen S1 und S2 ist die Schaltungsanordnung nach Fig. 4 im wesentlichen identisch mit denjenigen gemäss den Fig. 2 und 3, was den Aufbau der Gabelschaltung an sich anbetrifft, und sie ist identisch mit derjenigen gemäss Fig. 3, was die Gabelschaltung sowie die die zusätzlichen Funktionen ausübenden Schaltungsteile anbetrifft.

Die Summierstufen S1 und S2 nehmen die gleichen Eingangssignale auf, erzeugen jedoch unterschiedliche Ausgangssignale VS und VC. Die Ausgangsspannungen VA und VB der Operationsverstärker OP1 und OP2 werden den beiden Eingängen der Summierstufen S1 und S2 zugeführt. Die b-Ader und die a-Ader der Zweidrahtleitung sind mit den anderen Eingängen der Summierstufen S1 und S2 verbunden. Da die am Widerstand RF1 abfallende Spannung den Wert VR-VA hat, fliesst durch diesen Widerstand ein Strom des Wertes (VR-VA)/RF1. In entsprechender Weise hat der Strom durch den Widerstand RF2 den Wert (VT-VB)/RF2. Bei der Summierstufe 1 soll der Strom IRF1 vom Strom IRF2 substrahiert werden. Unter der Annahme, dass die Widerstände RF1 und RF2 gleich gross sind, besteht daher folgender Zusammenhang für die Gleichung der Ausgangsspannung VS:

$$VS = K \cdot (VB + VR - VA - VT)$$

In entsprechender Weise soll bei der Summierstufe 2 eine Addition der Ströme IRF1 und IRF2 stattfinden. Unter derselben Voraussetzung bezüglich der Widerstände RF1 und RF2 wie oben gilt dann für die Ausgangsspannung VC folgende Gleichung:

$$VC = K\ (VT + VR - VA - VB)$$

In den obenstehend aufgeführten Gleichungen stellt K eine Konstante dar, die vom Verstärkungsfaktor der betreffenden Summierstufe und von Widerstand RF1 bzw. RF2 abhängt.

Die Summierstufen S1 und S2 geben daher aufgrund der Eingangsspannungen VA, VB, VT, VR die Ausgangsspannungen VS und VC ab. Solche Summierstufen sind an sich bekannt und lassen sich besonders gut in integrierter Schaltkreistechnik realisieren.

Wie die Fig. 4 zeigt, kann das Ausgangssignal VC dem Differenzverstärker A4 über ein Tiefpassfilter LP zugeführt werden, um Störspannungen von dem nachfolgenden Schwellwertglied fernzuhalten.

**Patentansprüche**

1. Übertragerfreie Gabelschaltung (G) zur Verbindung einer Zweidrahtleitung (ZL) mit dem Eingangszweig (VS) und den Ausgangszweig (VE) einer Vierdrahtleitung (VL) bei gleichzeitiger Entkopplung der beiden Vierdrahtleitungszweige voneinander, bei der das über den Eingangszweig (VS) der Vierdrahtleitung (VL) ankommende und an den beiden Eingangsklemmen (sa, sb) mit zueinander gegenphasigen Eingangssignalspannungen auftretende Eingangssignal durch eine an die Zweidrahtleitung (ZL) angepasste Impedanzschaltung (Z/2) gedämpft auf die Zweidrahtleitung (ZL) gelangt und das auf der Zweidrahtleitung (ZL) auftretende Signal nach Substraktion des Eingangssignalanteils zu dem abgehenden Ausgangszweig (VE) der Vierdrahtleitung (VL) gelangt, wobei die eine Zweidrahtleitungsader (a) über eine erste Nachbildungsimpedanz (Z/2) mit der einen Klemme (sa) des Eingangszweigs (VS) der Vierdrahtleitung (VL) verbunden ist und wobei die andere Zweidrahtleitungsader (b) über eine zweite Nachbildungsimpedanz (Z/2) mit der anderen Ausgangsklemme (sb) des Eingangszweigs (VS) der Vierdrahtleitung (VL) verbunden ist, dadurch gekennzeichnet, dass an die eine Zweidrahtleitungsader (a), die über eine den halben Wellenwiderstand der symmetrischen Zweidrahtleitung (ZL) zumindest angenähert nachbildende Impedanz (Z/2) mit der einen Klemme (sa) des zumindest wechselstrommässig niederohmigen Eingangszweigs (VS) der Vierdrahtleitung (VL) verbunden ist, die eine Eingangsklemme (−) eines

zum Ausgangszweig (VE) der Vierdrahtleitung (VL) führenden Operationsverstärkers (V) über einen ersten Widerstand hohen Widerstandswerts (R) angeschlossen ist, die ausserdem mit der anderen Ausgangsklemme (sb) des Eingangszweigs (VS) über einen zweiten Widerstand hohen Widerstandswerts (2R) verbunden ist, und dass an die andere Zweidrahtleitungsader (b), die über eine ebenfalls den halben Wellenwiderstand der Zweidrahtleitung (ZL) zumindest angenähert nachbildende Impedanz (Z/2) mit dieser anderen Ausgangsklemme (sb) des Eingangszweigs (VS) der Vierdrahtleitung (VL) verbunden ist, die andere Eingangsklemme (+) des Operationsverstärkers (V) über einen dritten Widerstand ebenfalls hohen Widerstandswerts (R) angeschlossen ist, die ausserdem mit der genannten einen Ausgangsklemme (sa) des Eingangszweigs (VS) über einen wiederum hohen vierten Widerstand (2R) verbunden ist, wobei der invertierende Eingang (−) des Operationsverstärkers (V) mit dessen Ausgang und der nichtinvertierende Eingang (+) des Operationsverstärkers (V) mit dem Leitungssymmetriepunkt (O) jeweils über einen ebenfalls hochohmigen Widerstand (vR) verbunden ist (Fig. 1).

2. Übertragerfreie Gabelschaltung nach Anspruch 1, dadurch gekennzeichnet, dass die an die eine Zweidrahtleitungsader (a) über den ersten Widerstand hohen Widerstandswerts (R) angeschlossene eine Eingangsklemme (−) des Operationsverstärkers (V) über einen doppelt so grossen zweiten Widerstand (2R) mit der anderen Ausgangsklemme (sb) des Eingangszweigs (VS) verbunden ist, und dass die an die andere Zweidrahtleitungsader (b) über den dritten Widerstand ebenfalls des genannten hohen Widerstandswerts (R) angeschlossene andere Eingangsklemme (+) des Operationsverstärkers (V) über einen wiederum doppelt so hohen vierten Widerstand (2R) mit der genannten einen Ausgangsklemme (sa) des Eingangszweigs (VS) verbunden ist, wobei der invertierende Eingang (−) des Operationsverstärkers (V) mit dessen Ausgang und der nichtinvertierende Eingang (+) des Operationsverstärkers (V) mit dem Leitungssymmetriepunkt (O) jeweils über einen Widerstand mit einem v-mal so hohen Widerstandswert (vR) verbunden ist, worin v der Verstärkungsfaktor des Operationsverstärkers (V) ist (Fig. 1).

3. Übertragerfreie Gabelschaltung nach Anspruch 1 oder 2, dadurch gekennzeichnet, dass die nichtinvertierenden Eingänge (+) zweier im Eingangszweig der Vierdrahtleitung liegender Operationsverstärker (OP1, OP2) jeweils an einer Bezugsgleichspannung (−48V) liegen, dass an dem nichtinvertierenden Eingang (+) des ersten (OP2) der beiden Operationsverstärker der Eingangszweig (VE) der Vierdrahtleitung angeschlossen ist, und dass der Ausgang dieses Operationsverstärkers (OP2) über einen Widerstand (RF2) mit der a-Ader der Zweidrahtleitung und über einen weiteren Widerstand (Rk) mit dem invertierenden Eingang (−) des zweiten Operationsverstärkers (OP1) verbunden ist, dessen Ausgang über einen Widerstand (RF1) an der b-Ader der Zweidrahtleitung liegt (Fig. 2).

4. Schaltung nach Anspruch 3, dadurch gekennzeichnet, dass zur Schleifenschlussüberwachung der Teilnehmeranschlussleitung ein Differenzverstärker (A2), dessen einer Eingang (−) mit dem Ausgang der Summierschaltung (R1 bis R4, Rr3, A1) verbunden ist und dessen zweiter Eingang (+) an einer Bezugsspannung (+V) liegt, sowie ein mit seiner Steuerelektrode an den Ausgang des Differenzverstärkers (A2) angeschlossener Transistor (Q1) vorgesehen ist, wobei die Schaltkreisparameter so gewählt sind, dass der Transistor (Q1) bei Über- bzw. Unterschreiten der Bezugsspannung durch das Ausgangssignal der Summierschaltung (R1 bis R4, Rr3, A1) seinen Leitfähigkeitszustand ändert (Fig. 3).

5. Schaltung nach Anspruch 3 oder 4, dadurch gekennzeichnet, dass zur Begrenzung des Stroms über die Teilnehmeranschlussleitung ein Schwellwertglied, das durch das Ausgangssignal der Summierschaltung (R1 bis R4, Rr3, A1) angesteuert wird, sowie ein Transistor (Q2) vorgesehen ist, der bei Überschreiten eines Schwellwerts durch das Ausgangssignal der Summierschaltung (R1 bis R4, Rr3, A1) seinen Leitfähigkeitszustand ändert und die Bezugsgleichspannung des mit seinem Ausgang an der b-Ader der Teilnehmeranschlussleitung liegenden Operationsverstärkers (OP2) so weit verändert, dass die Ausgangssignale der beiden Operationsverstärker (OP1, OP2) annähernd gleich gross sind (Fig. 3).

6. Schaltung nach einem der Ansprüche 3 bis 5, dadurch gekennzeichnet, dass zur Feststellung einer Unsymmetrie des über die Leitungsadern (a, b) der Teilnehmeranschlussschaltung fliessenden Stroms eine zweite Summierstufe (CR, Rr4, A3, R1′ bis R4′), deren Eingänge mit denselben Eingangsspannungen beaufschlagt werden wie diejenigen der ersten Summierschaltung (R1 bis R4, Rr3, A1), ein Differenzverstärker (A4), der als Komparator für den Vergleich des Ausgangssignals der zweiten Summierstufe (CR, Rr4, A3, R1′ bis R4′) mit einer Bezugsspannung dient, sowie ein elektronischer Schalter (Q3) vorgesehen sind, der bei Unter- bzw. Überschreiten der erwähnten Bezugsspannung seinen Leitfähigkeitszustand ändert (Fig. 3).

7. Schaltung nach Anspruch 6, dadurch gekennzeichnet, dass zwischen der zweiten Summierstufe (S2) und dem Differenzverstärker (A4) ein Tiefpassfilter (LP) eingefügt ist (Fig. 4).

8. Schaltung nach Anspruch 6, dadurch gekennzeichnet, dass die zweite Summierstufe (CR, Rr4, A3, R1′ bis R4′) einen Differenzverstärker (A3) aufweist, dessen Eingänge jeweils über einen Widerstand (R1′ bis R4′) mit den Eingängen der ersten Summierstufe (R1 bis R4, Rr3, A1) über einen Widerstand (R1 bis R4) in Verbindung stehen (Fig. 3).

9. Schaltung nach Anspruch 3, dadurch gekennzeichnet, dass das Ausgangssignal (VS) der ersten Summierschaltung (R1 bis R4, Rr3, A1) proportional dem resultierenden Wert der Spannungen VB+VR−VA−VT ist, wobei mit VR und VT

die Signalspannungen an der a-Ader bzw. der b-Ader der Zweidrahtleitung bezeichnet sind und VA und VB die Ausgangsspannungen des ersten bzw. zweiten Operationsverstärkers (OP1 bzw. OP2) darstellen (Fig. 4).

10. Schaltung nach Anspruch 6, dadurch gekennzeichnet, dass die Ausgangsspannung der zweiten Summierstufe (CR, Rr4, A3, R1' bis R4') dem resultierenden Wert der Spannungen VT+VR−VA−VB proportional ist, wobei mit VR und VT die Signalspannungen an der a-Ader und der b-Ader der Zweidrahtleitung bezeichnet sind und VA und VB die Ausgangsspannungen des ersten und des zweiten Operationsverstärkers (OP1 bzw. OP2) bezeichnen (Fig. 4).

11. Schaltung nach einem der Ansprüche 1 bis 10, dadurch gekennzeichnet, dass sie mit einem Vierdrahtleitungs-Eingangszweig (VS) zum Aussenden von Sendesignalimpulsen zu bestimmten Zeitpunkten und/oder mit einem bestimmten Schwerpunkt ihres Frequenzspektrums und einem Vierdrahtleitungs-Ausgangszweig (VE) zum Empfangen von Empfangssignalimpulsen zu anderen Zeitpunkten und/oder mit einem anderen Schwerpunkt ihres Frequenzspektrums verbunden ist.

## Claims

1. A transformer-free hybrid circuit (G) for connecting a two-wire line (ZL) to the input branch (VS) and the output branch (VE) of a four-wire line (VL) with simultaneous decoupling of the two four-wire line branches from one another, wherein the input signal arriving via the input branch (VS) of the four-wire line (VL) at the two input terminals (sa, sb) as input signal voltages in phase opposition to one another is fed onto the two-wire line (ZL) in an attenuated fashion by means of an impedance circuit matched to the two-wire line (ZL), and the signal occurring on the two-wire line (ZL) is fed to the outgoing output branch (VE) of the four-wire line (VL) after the substraction of the input signal portion, where the one two-wire line conductor (a) is connected to the one terminal (sa) of the input branch (VS) of the four-wire line (VL) by means of a first dummy impedance (Z/2) and where the other two-wire line conductor (b) is connected to the other output terminal (sb) of the input branch (VS) of the four-wire line (VL) by means of a second dummy impedance (Z/2), characterised in that by means of a first resistor of a high resistance value (R), the one input terminal (−) of an operational amplifier (V) leading to the output branch (VE) of the four-wire line (VL) is connected to the one two-wire line conductor (a) connected to the one terminal (sa) of the input branch (VS) of the four-wire line (VL), which is at least low-ohmic for alternating currents, by means of an impedance (Z/2) which at least approximately simulates half the surge impedance of the symmetrical two-wire line (ZL), which input terminal (−) is further connected to the other output terminal (sb) of the input branch (VS) by means of a second resistor of a high resistance value (2R), and that by means of a third resistor of an equally high resistance value (R), the other input terminal (+) of the operational amplifier (V) is connected to the other two-wire line conductor (b) connected to said other output terminal (sb) of the input branch (VS) of the four-wire line (VL) by means of an impedance (Z/2) which at least approximately simulates half the surge impedance of the two-wire line (ZL), which other input terminal (+) is further connected to said one output terminal (sa) of the input branch (VS) by means of a similarly high fourth resistance (2R), where the inverting input (−) of the operational amplifier (V) is connected to the output thereof and the non-inverting input (+) of the operational amplifier (V) is connected to the point of symmetry (0) of the line by means of a similar high-ohmic resistor (vR) in each case (Fig. 1).

2. Transformer-free hybrid circuit as claimed in Claim 1, characterised in that the one input terminal (−) of the operational amplifier (V), which is connected to the one two-wire line conductor (a) by the first resistor of a high resistance value (R), is connected to the other output terminal (sb) of the input branch (VS) by means of a second resistance (2R) which is twice as high, and that the other input terminal (+) of the operational amplifier (V), which is connected to the other two-wire line conductor (b) by means of the third resistor of said high resistance value (R), is connected to said one output terminal (sa) of the input branch (VS) by means of a fourth resistance (2R) which is twice as high, where the inverting input (−) of the operational amplifier (V) is connected to the output thereof and the non-inverting input (+) of the operational amplifier (V) is connected to the point of symmetry (0) of the line by means of a resistor having a resistance value (vR) which is v-times as high, where v is the amplification factor of the operational amplifier (V) (Fig. 1).

3. A transformer-free hybrid circuit as claimed in Claim 1 or 2, characterised in that the non-inverting inputs (+) of two operational amplifiers (OP1, OP2) arranged in the input branch of the four-wire line are respectively connected to a direct reference voltage (−48V), that the input branch (VE) of the four-wire line is connected to the non-inverting input (+) of the first (OP2) of the two operational amplifiers, and that the output of this operational amplifier (OP2) is connected to the a-conductor of the two-wire line by means of a resistor (RF2) and to the inverting input (−) of the second operational amplifier (OP1) by means of a further resistor (Rk), the output of which second operational amplifier (OP1) is connected to the b-conductor of the two-wire line by means of a resistor (RF1) (Fig. 2).

4. A circuit as claimed in Claim 3, characterised in that for the loop end monitoring of the subscriber terminal line, there are provided both a differential amplifier (A2) having one input (−) connected to the output of the summation circuit (R1 to R4, Rr3, A1) and its second input (+)

connected to a reference voltage (+V), and a transistor (Q1) which has its control electrode connected to the output of the differential amplifier (A2), where the switching circuit parameters are selected to be such that when the output signal of the summation circuit (R1 to R4, Rr3, A1) exceeds or falls below the reference voltage, the transistor (Q1) changes its state of conductivity (Fig. 3).

5. A circuit as claimed in Claim 3 or 4, characterised in that in order to limit the current across the subscriber terminal line there are provided both a threshold value element controlled by the output signal of the summation circuit (R1 to R4, Rr3, A1) and a transistor (Q2) which changes its state of conductivity when the output signal of the summation circuit (R1 to R4, Rr3, A1) exceeds a threshold value and so changes the direct reference voltage of the operational amplifier (OP2), which has its output connected to the b-conductor of the subscriber terminal line that the output signals of the two operational amplifiers (OP1, OP2) are virtually identical (Fig. 3).

6. A circuit as claimed in one of Claims 3 to 5, characterised in that in order to determine an asymmetry of the current flowing across the line conductors (a, b) of the subscriber terminal circuit, there are provided a second summation stage (CR, Rr4, A3, R1' to R4') whose inputs are supplied with the same input voltages as those of the first summation circuit (R1 to R4, Rr3, A1), a differential amplifier (A4) which serves as a comparator for the comparison of the output signal of the second summation stage (CR, Rr4, A3, R1' to R4') with a reference voltage, and an electronic switch (Q3) which changes its conductivity state when said reference voltage is not reached or exceeded, as the case may be (Fig. 3).

7. A circuit as claimed in Claim 6, characterised in that a low-pass filter (LP) is inserted between the second summation stage (S2) and the differential amplifier (A4) (Fig. 4).

8. A circuit as claimed in Claim 6, characterised in that the second summation stage (CR, Rr4, A3, R1' to R4') has a differential amplifier (A3) whose inputs are respectively connected via a resistor (R1' to R4') to the inputs of the first summation stage (R1 to R4, Rr3, A1) via a resistor (R1 to R4) (Fig. 3).

9. A circuit as claimed in Claim 3, characterised in that the output signal (VS) of the first summation circuit (R1 to R4, Rr3, A1) is proportional to the resultant value of the voltages VB+BR−VA−VT, where VR and VT refer to the signal voltages at the a-conductor and the b-conductor of the two-wire line and VA and VB represent the output voltages of the first and second operational amplifiers (OP1 and OP2) (Fig. 4).

10. A circuit as claimed in Claim 6, characterised in that the output voltage of the second summation stage (CR, Rr4, A3, R1' to R4') is proportional to the resultant value of the voltages VT+VR−VA−VB, where VR and VT represent the signal voltages at the a-conductor and the b-conductor of the two-wire line and VA and VB the output voltages of the first and of the second operational amplifier (OP1 and OP2) (Fig. 4).

11. A circuit as claimed in one of Claims 1 to 10, characterised in that it is connected to a four-wire line input branch (VS) in order to transmit transmitting signal pulses at specific times and/or at a specific frequency spectrum centre and a four-wire line output branch (VE) in order to receive receiving signal pulses at other times and/or at another frequency spectrum centre.

**Revendications**

1. Termineur (G) sans translateur, servant à relier une ligne bifilaire (ZL) à la branche d'entrée (VS) et à la branche de sortie (VE) d'une ligne à quatre fils (VL) moyennant un découplage simultané des deux branches de la ligne à quatre fils l'une par rapport à l'autre, et dans lequel le signal d'entrée arrivant par l'intermédiaire de la branche d'entrée (VS) de la ligne à quatre fils (VL) et apparaissant sur les deux bornes d'entrée (sa, sb) avec des tensions possédant des phases réciproquement opposées, parvient dans la ligne bifilaire (ZL) en étant affaiblie par l'intermédiaire d'un circuit d'impédance (Z/2) adapté à la ligne bifilaire (ZL), et dans lequel le signal apparaissant dans la ligne bifilaire (ZL) parvient, après soustraction de la composante du signal d'entrée, à la branche de sortie de départ (VE) de la ligne à quatre fils (VL), un conducteur (a) de la ligne bifilaire étant relié par l'intermédiaire d'une première impédance d'équilibrage (Z/2) à une borne (sa) de la branche d'entrée (VS) de la ligne à quatre fils (VL) et l'autre conducteur (b) de la ligne bifilaire étant relié par l'intermédiaire d'une seconde impédance d'équilibrage (Z/2) à l'autre borne de sortie (sb) de la branche d'entrée (VS) de la ligne à quatre fils (VL), caractérisé par le fait qu'au conducteur (a) de la ligne bifilaire, qui est relié par l'intermédiaire d'une impédance (Z/2) simulant au moins approximativement la demi-impédance caractéristique de la ligne bifilaire symétrique (ZL), à une borne (sa) de la branche d'entrée (VS), présentant une faible valeur ohmique au moins pour le courant alternatif, de la ligne à quatre fils (VL), se trouve raccordée par l'intermédiaire d'une première résistance possédant une valeur résistive (R) élevée une borne d'entrée (−) d'un amplificateur opérationnel (V) conduisant à une branche de sortie (VE) de la ligne à quatre fils (VL), cette borne étant reliée en outre à l'autre borne de sortie (sb) de la branche d'entrée (VS) par l'intermédiaire d'une seconde résistance possédant une valeur résistive élevée (2R) et qu'à l'autre conducteur (b) de la ligne bifilaire, qui est relié par l'intermédiaire d'une impédance (Z/2) simulant également au moins approximativement la demi-impédance caractéristique de la ligne bifilaire (ZL) à cette autre borne de sortie (sb) de la branche d'entrée (VS) de la ligne à quatre fils (VL), se trouve raccordée par l'intermédiaire d'une troisième résistance possédant également une valeur résistive élevée (R) l'autre borne d'entrée

(+) de l'amplificateur opérationnel (V), qui est en outre reliée à ladite borne de sortie (sa) de la branche (VS) par l'intermédiaire d'une quatrième résistance (2R) possédant à nouveau une valeur élevée, l'entrée inverseuse (−) de l'amplificateur opérationnel (V) étant reliée à la sortie de ce dernier et l'entrée non inverseuse (+) de l'amplificateur opérationnel (V) étant reliée au point (O) de symétrie de la ligne, par l'intermédiaire de résistances respectives (vR) possédant également une forte valeur ohmique (fig. 1).

2. Termineur sans translateur selon la revendication 1, caractérisé par le fait qu'une borne d'entrée (−) de l'amplificateur opérationnel (V), raccordée à un conducteur (a) de la ligne bifilaire par l'intermédiaire de la première résistance de forte valeur résistive (R), est reliée par l'intermédiaire d'une résistance de valeur double (2R) à l'autre borne de sortie (sb) de la branche d'entrée (VS), et que l'autre borne d'entrée (+) de l'amplificateur opérationnel (V) raccordée à l'autre conducteur (b) de la ligne bifilaire par l'intermédiaire de la troisième résistance possédant également ladite valeur résistive élevée (R) est reliée par l'intermédiaire d'une quatrième résistance (2R) possédant à nouveau une valeur double, à la borne de sortie indiquée (sa) de la branche d'entrée (VS), l'entrée inverseuse (−) de l'amplificateur opérationnel (V) étant reliée à la sortie de ce dernier et l'entrée non inverseuse (+) de l'amplificateur opérationnel (V) étant reliée au point (O) de symétrie de la ligne, par l'intermédiaire de résistances respectives d'une valeur égale à v fois la valeur résistive élevée (vR), v étant le facteur d'amplification de l'amplificateur opérationnel (V) (fig. 1).

3. Termineur sans translateur suivant la revendication 1 ou 2, caractérisé par le fait que les entrées non inverseuses (+) des deux amplificateurs opérationnels (OP1, OP2) situés dans la branche d'entrée de la ligne à quatre fils sont placés respectivement à une tension continue de référence (−48V), que la branche d'entrée (VE) de la ligne à quatre fils est raccordée à l'entrée non inverseuse (+) du premier (OP2) des deux amplificateurs opérationnels de la branche (VE) de la ligne à quatre fils et que la sortie de cet amplificateur opérationnel (OP2) est reliée par l'intermédiaire d'une résistance (RF2) au conducteur a de la ligne bifilaire et par l'intermédiaire d'une autre résistance (Rk) à l'entrée inverseuse (−) du second amplificateur opérationnel (OP1), dont la sortie est reliée par l'intermédiaire d'une résistance (RF1) au conducteur b de la ligne bifilaire (fig. 2).

4. Circuit suivant la revendication 3, caractérisé par le fait que pour le contrôle de la fermeture de boucle de la ligne d'abonné, il est prévu un amplificateur différentiel (A2), dont une entrée (−) est reliée à la sortie du circuit additionneur (R1 à R4, Rr3, A1) et dont la seconde entrée (+) est placée à une tension de référence (+V), ainsi qu'un transistor (Q1) raccordé par son électrode de commande à la sortie de l'amplificateur différentiel (A2), les paramètres du circuit étant choisis de telle manière que l'état de conduction du transistor (Q1) varie dans ce cas d'un dépassement par le haut ou par le bas de la tension de référence par le signal de sortie du circuit additionneur (R1, R4, Rr3, A1) (fig. 3).

5. Circuit suivant la revendication 3 ou 4, caractérisé par le fait que pour limiter le courant dans la ligne d'abonné, il est prévu un organe à valeur de seuil qui est commandé par le signal de sortie du circuit additionneur (R1 à R4, Rr3, A1), ainsi qu'un transistor (Q2) dont l'état de conduction varie lors du dépassement d'une valeur de seuil par le signal de sortie du circuit additionneur (R1 à R4, Rr3, A1) et qui modifie la tension continue de référence de l'amplificateur opérationnel (OP2) raccordé par sa sortie au conducteur b de la ligne d'abonné, au point que les signaux de sortie des deux amplificateurs opérationnels (OP1, OP2) soient approximativement identiques (fig. 3).

6. Circuit suivant l'une des revendications 3 à 5, caractérisé par le fait que pour la détermination d'une dissymétrie du courant circulant dans les conducteurs (a, b) de la ligne du circuit d'abonné, il est prévu un second étage additionneur (CR, Rr4, A3, R1' à R4'), dont les entrées sont chargées par les mêmes tensions d'entrée que celles du premier circuit additionneur (R1 à R4, Rr3, A1), un amplificateur différentiel (A4) qui sert de comparateur pour la comparaison du signal de sortie du second étage additionneur (CR, Rr4, A3, R1', R4') avec une tension de référence, ainsi qu'un commutateur électronique (Q3) dont l'état de conduction varie lors du dépassement par le bas ou par le haut de la tension de référence mentionnée (fig. 3).

7. Circuit suivant la revendication 6, caractérisé par le fait qu'un filtre passe-bas (S2) est inséré entre le second étage additionneur (S2) et l'amplificateur différentiel (A4).

8. Circuit suivant la revendication 6, caractérisé par le fait que le second étage additionneur (CR, Rr4, A3, R1' à R4') comporte un amplificateur différentiel (A3) dont les entrées sont reliées par l'intermédiaire de résistances (R1 à R4 et R1' à R4') aux entrées du premier étage additionneur (R1 à R4, Rr3, A1).

9. Circuit suivant la revendication 3, caractérisé par le fait que le signal de sortie (VS) du premier circuit additionneur (R1 à R4, Rr3, A1) est proportionnel à la valeur résultante des tensions VB+VR−VA−VT, VR et VT désignant les tensions de signal dans les conducteurs a et b de la ligne bifilaire et VA et VB représentant les tensions de sortie du premier et du second amplificateur opérationnel (OP1 et OP2) (fig. 4).

10. Circuit suivant la revendication 6, caractérisé par le fait que la tension de sortie du second étage additionneur (CR, Rr4, A3, R1' à R4') est proportionnelle à la valeur résultante des tensions VT+VR−VA−VB, VR et VT désignant les tensions de signal dans les conducteurs a et b de la ligne bifilaire et VA et VB représentant les tensions de sortie du premier et du second amplificateur opérationnel (OP1 et OP2) (fig. 4).

11. Circuit suivant l'une des revendications 1 à 10, caractérisé par le fait qu'il est relié à une branche d'entrée (VS) d'une ligne à quatre fils, servant à émettre des impulsions de signaux d'émission à des instants déterminés et/ou avec un barycentre déterminé de leur spectre de fréquences, et à une branche de sortie (VE) d'une ligne bifilaire, servant à la réception d'impulsions de signaux de réception à d'autres instants et/ou avec un autre barycentre de leur spectre de fréquences.

FIG 1

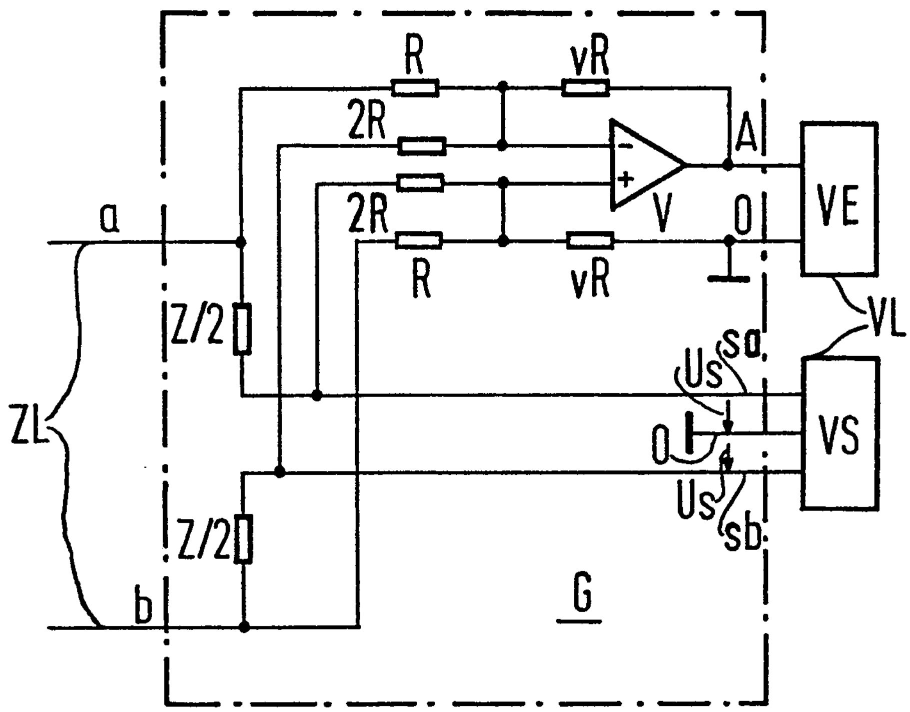

FIG 2

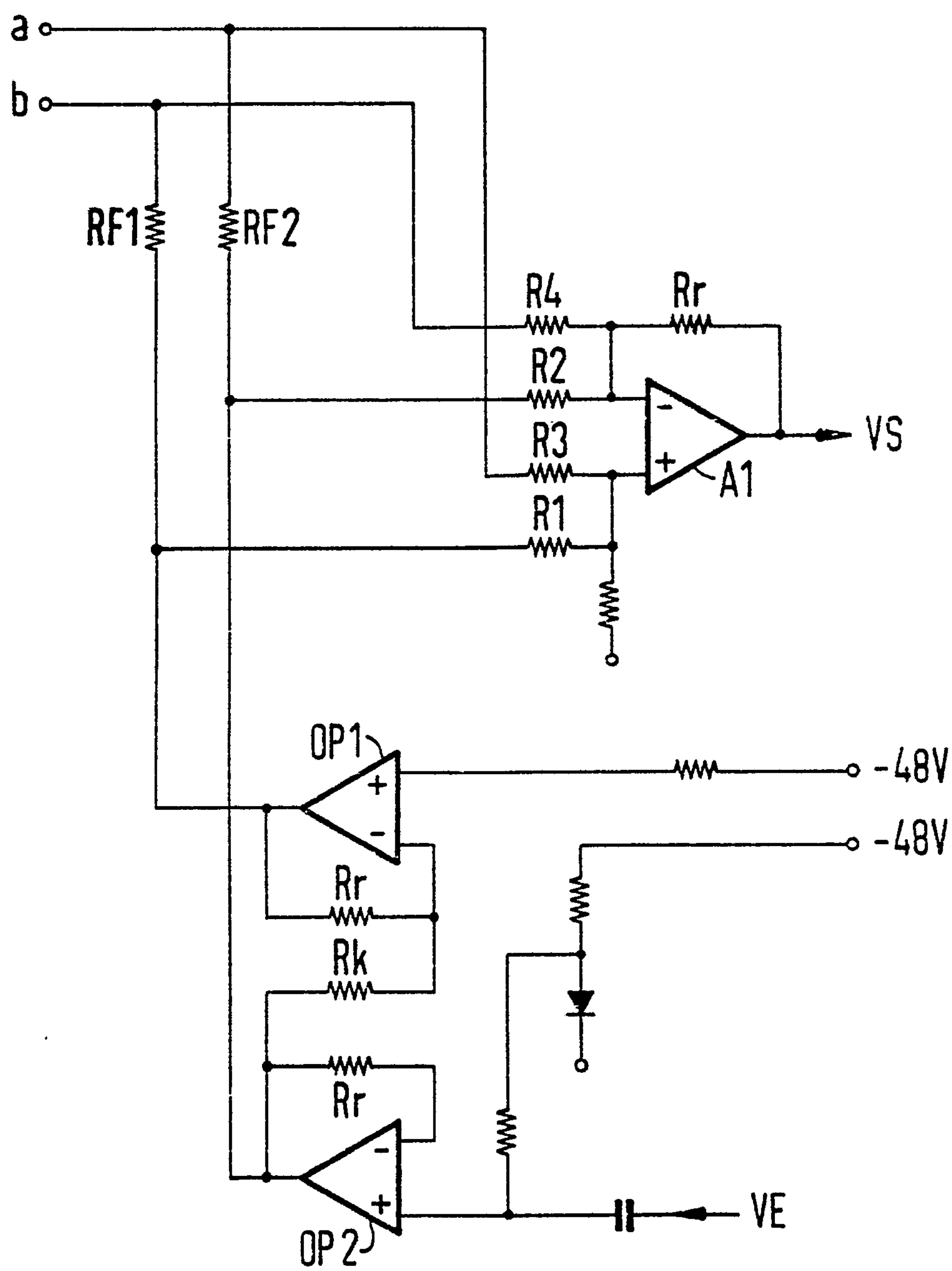

FIG 3

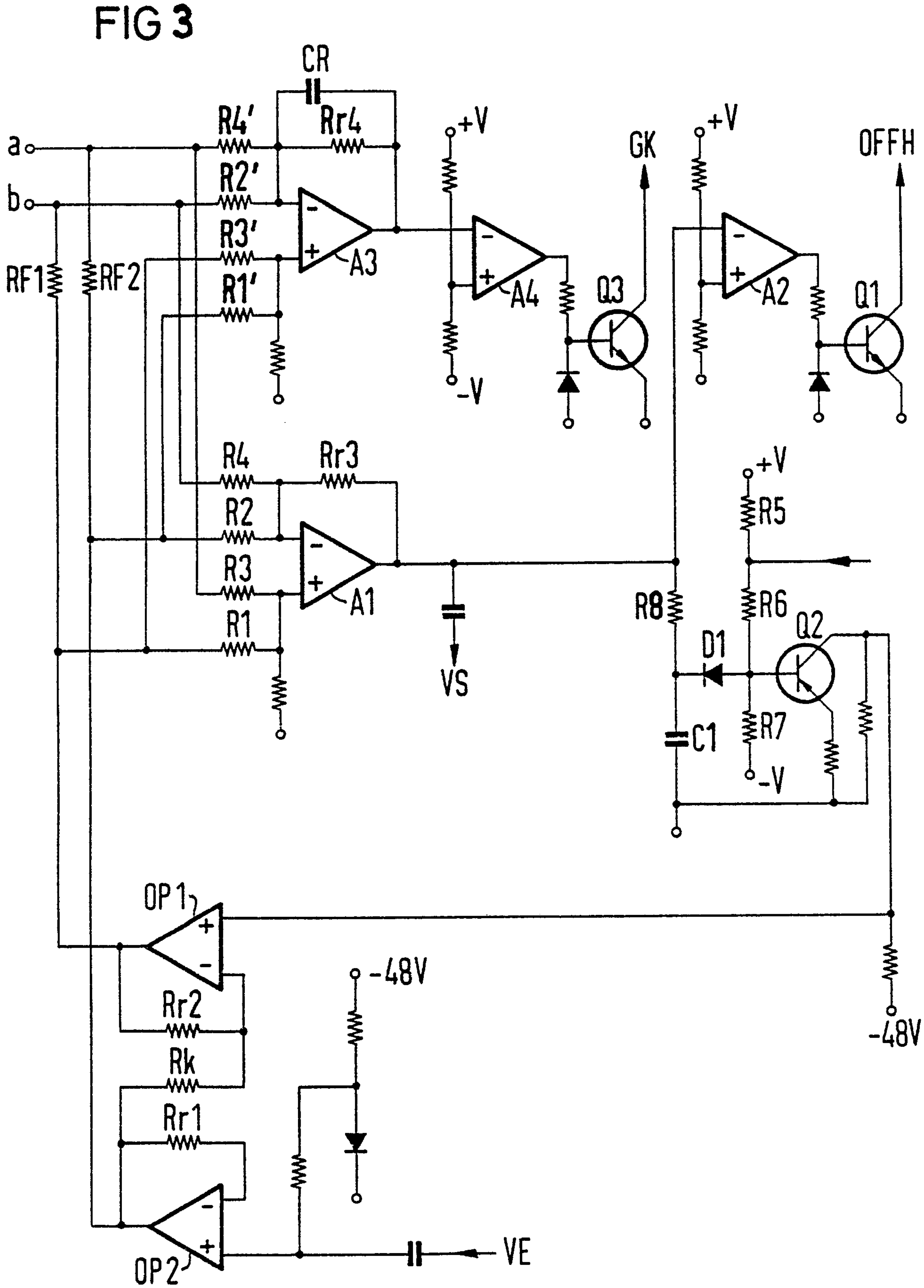
CR
R4'
Rr4
a
b
R2'
R3'
R1'
A3
RF1
RF2
+V
-V
A4
GK
Q3
+V
OFFH
A2
Q1
R4
Rr3
R2
R3
R1
A1
VS
+V
R5
R6
R8
Q2
D1
R7
C1
-V
OP 1
Rr2
Rk
Rr1
OP 2
-48V
-48V
VE

FIG 4

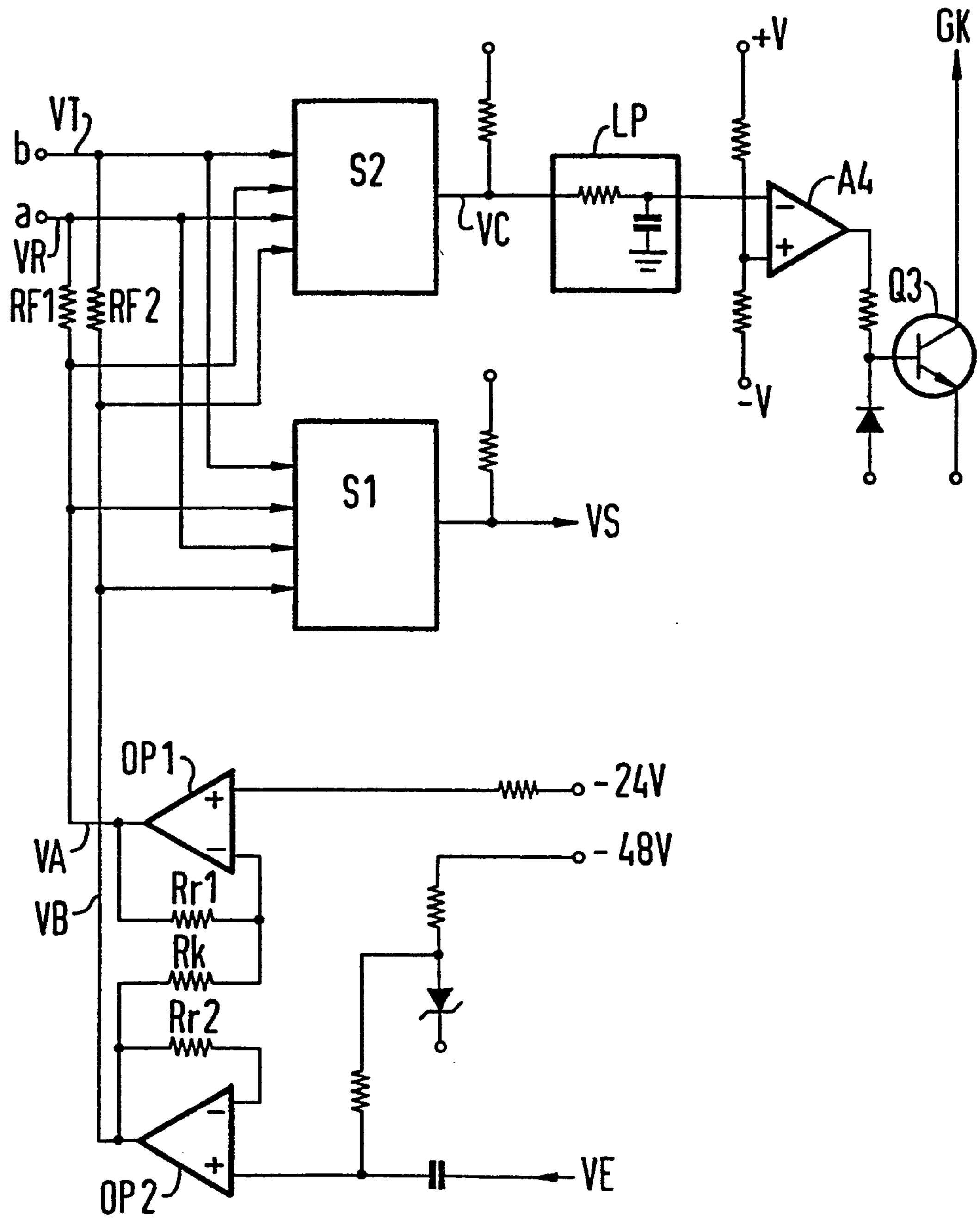
VT
b
a
VR
RF1
RF2
S2
S1
VC
LP
+V
-V
A4
GK
Q3
VS
OP1
OP2
VA
VB
Rr1
Rk
Rr2
-24V
-48V
VE